# EUROPEAN PATENT APPLICATION

(11) **EP 4 640 553 A1**
(43) Date of publication of application: **29.10.2025**
(21) Application number: 25166647.5
(22) Date of filing: 27.03.2025
(51) Int. Cl.: B63H 25/04, G08G 3/00, B63B 49/00

(54) **SYSTEM FOR AND METHOD OF REMOTELY OPERATING WATERCRAFT**

(30) Priority: 25.04.2024 JP 2024071400
(71) Applicant: Yamaha Hatsudoki Kabushiki Kaisha, Iwata-shi, Shizuoka 438-8501 (JP)
(72) Inventor: Inoue, Hiroshi, Iwata-shi, Shizuoka, 4388501 (JP)
(74) Representative: Grünecker Patent- und Rechtsanwälte PartG mbB

(57) **Abstract**

A system (1) for remotely operating a watercraft (10) includes a controller (4), a communication portion (5), and a communication switching portion (6). The controller (4) is disposed in the watercraft (10) and controls the watercraft (10). The communication portion (5) is disposed in the watercraft (10) and is capable of a satellite communication utilizing a satellite and a terrestrial communication utilizing a ground base station. The communication switching portion (6) switches communication methods of the communication portion (5) from one to another. When radio waves transmitted from the ground base station are unreceivable, the communication switching portion (6) switches the communication methods of the communication portion 5 from the terrestrial communication to the satellite communication.

## Description

The present invention relates to a system for and a method of remotely operating a watercraft.

Japan Laid-open Patent Application Publication No. JP 2020-132095 A discloses a technology regarding remotely operating a watercraft.

When satellite communication is used as the communication means for remotely operating a watercraft, for instance, communication is enabled even in the open ocean; however, the satellite communication is more delayed in communication than terrestrial communication. Contrarily, when the terrestrial communication is used as the communication means for remotely operating a watercraft, the terrestrial communication is less delayed in communication than the satellite communication; however, remotely operating a watercraft is enabled only within a coverage area of radio waves transmitted from a ground base station.

It is an object of the present disclosure to provide a system and a method, by which communication methods for a watercraft are made switchable from one to another depending on situations.

A system for remotely operating a watercraft according to an aspect includes a controller, a communication portion, and a communication switching portion. The controller is disposed in the watercraft and controls the watercraft. The communication portion is disposed in the watercraft and is capable of a satellite communication utilizing a satellite and a terrestrial communication utilizing a ground base station. The communication switching portion switches communication methods of the communication portion from one to another. The communication switching portion switches the communication methods of the communication portion from the terrestrial communication to the satellite communication when radio waves transmitted from the ground base station are unreceivable.

In the system for remotely operating a watercraft according to the aspect, when the radio waves transmitted from the ground base station are unreceivable, the communication methods of the communication portion are switched from the terrestrial communication to the satellite communication. Accordingly, it is made possible to remotely operate the watercraft by utilizing the satellite communication even in a location outside the coverage area of the radio waves transmitted from the ground base station. Contrarily, when the radio waves transmitted from the ground base station are receivable, it is made possible to remotely operate the watercraft by utilizing the terrestrial communication. Consequently, it is made possible to remotely operate the watercraft with accuracy by a communication method with less delay, for instance, in docking to a shore or in proximity to the shore.

A method of remotely operating a watercraft according to another aspect is executed by a computer. The watercraft includes a communication portion capable of a satellite communication utilizing a satellite and a terrestrial communication utilizing a ground base station. The method of remotely operating the watercraft includes switching communication methods of the communication portion from the terrestrial communication to the satellite communication when radio waves transmitted from the ground base station are unreceivable by the communication portion.

Overall, according to the present invention, it is made possible to provide a system and a method, by which communication methods for a watercraft are made switchable from one to another depending on situations.

### BRIEF DESCRIPTION OF THE DRAWINGS

FIG. 1 is a functional block diagram of a watercraft operating system according to a preferred embodiment.
FIG. 2 is a diagram schematically showing navigation routes for a watercraft.
FIG. 3 is a flowchart showing a series of processing to be executed by a watercraft operating controller.
FIG. 4 is a flowchart showing a series of processing to be executed by the watercraft operating controller.

### DETAILED DESCRIPTION OF EMBODIMENTS

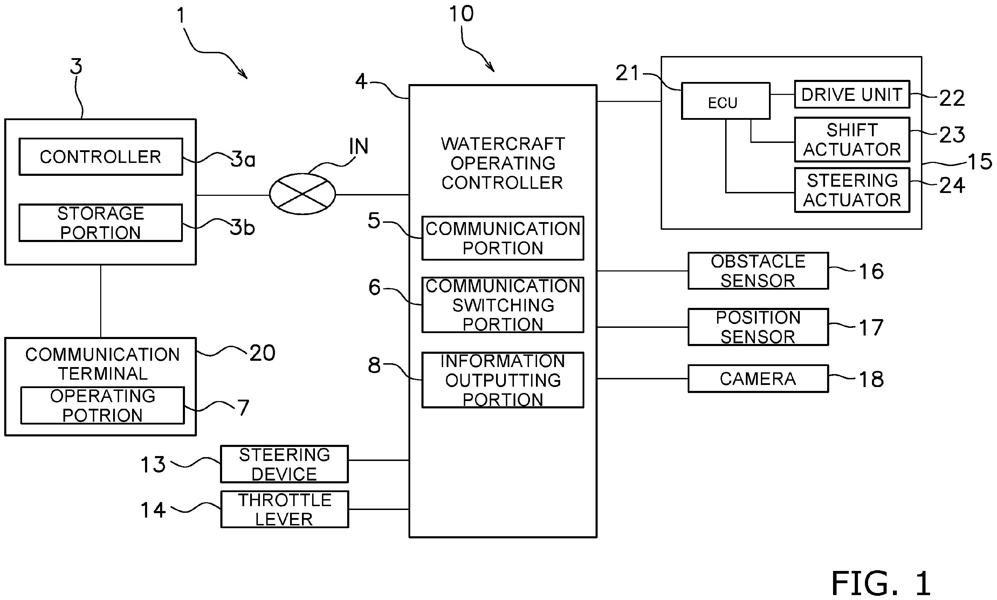

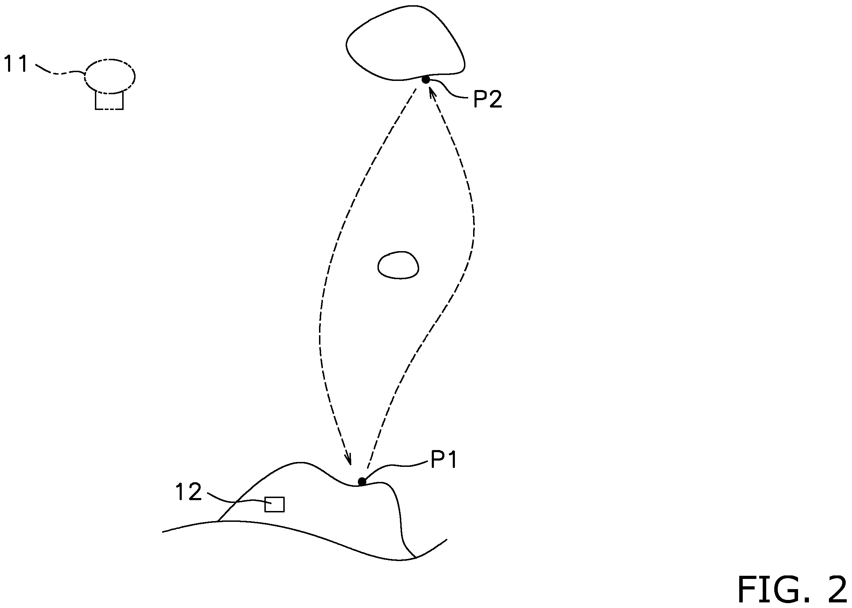

A preferred embodiment will be hereinafter explained with reference to drawings. FIG. 1 is a functional block diagram of a system 1 for remotely operating a watercraft 10 (hereinafter referred to as a watercraft operating system). FIG. 2 is a diagram schematically showing navigation routes for the watercraft 10. As shown in FIG. 2, the watercraft operating system 1 is used for an application for remotely operating the watercraft 10 in a round-trip navigation between a first port P1 and a second port P2 remote from the first port P1. In the watercraft operating system 1 according to the present preferred embodiment, the round-trip navigation between the first and second ports P1 and P2 is enabled for the watercraft 10 by automatically operating the watercraft 10. In other words, watercraft operating modes, set for the watercraft 10 in the present preferred embodiment, include a remote watercraft operating mode for remotely operating the watercraft 10 and an automated watercraft operating mode for automatically operating the watercraft 10. It should be noted that in the watercraft operating system 1, the watercraft 10 does not have to be able to navigate round trip between the first and second ports P1 and P2 by automatically operating the watercraft.

The watercraft 10 is an unmanned watercraft, for instance, and is used for an application for transporting only supplies such as food and fuel. The distance from the first port P1 to the second port P2 is, for instance, 50 km. The second port P2 is located in, for instance, a remote island.

The watercraft operating system 1 includes a server 3, a watercraft operating controller 4 (exemplary controller), a communication portion 5, a communication switching portion 6, an operating portion 7, and an information outputting portion 8. The server 3 is used as, for instance, a computer for managing the watercraft 10. The server 3 is connected to an operating terminal 20 for monitoring and remotely operating the watercraft 10 in a communicable manner. The server 3 and the operating terminal 20 are connected to be communicable with each other through a network such as the Internet. The server 3 is disposed on the ground. It should be noted that the server 3 may be disposed on the watercraft 10. The operating terminal 20 may be a communication terminal such as a smartphone or tablet.

The server 3 includes a controller 3a and a storage portion 3b. The controller 3a includes a processor such as a CPU (Central Processing Unit) and memories such as a RAM (Random Access Memory) and a ROM (Read Only Memory). The controller 3a controls the watercraft operating controller 4 in accordance with operating the operating terminal 20. In the remote watercraft operating mode, the controller 3a is capable of remotely operating the watercraft 10 through the watercraft operating controller 4. The controller 3a is capable of switching the modes for operating the watercraft 10 from one to another in accordance with operating the operating terminal 20. For example, in a condition that the watercraft 10 is being controlled by the automated watercraft operating mode, if the controller 3a receives, from the operating terminal 20, a signal for switching the modes for operating the watercraft 10 from the automated watercraft operating mode to the remote watercraft operating mode, the controller 3a switches the modes for operating the watercraft 10 from the automated watercraft operating mode to the remote watercraft operating mode.

The controller 3a is configured to be communicable with the watercraft operating controller 4 through the communication portion 5 by one selected from methods of communication including satellite communication and terrestrial communication. The satellite communication is a communication method using a satellite 11. The terrestrial communication is a communication method using a ground base station 12 installed on the ground. The ground base station 12 is, for instance, a wireless base station used for LTE (Long Term Evolution). The controller 3a is capable of switching the communication methods to be executed by the communication portion 5 from one to another in accordance with operating the operating terminal 20.

The storage portion 3b has stored a variety of information and a variety of programs. The storage portion 3b includes, for instance, recording media/medium such as an HDD (Hard Disk Drive) and/or an SSD (Solid State Drive). The storage portion 3b has stored information regarding the positions of the first and second ports P1 and P2, information regarding a nautical chart in the surroundings of the first and second ports P1 and P2, a coverage area of radio waves from the ground base station 12, and so forth. The storage portion 3b has stored at least one route from the first port P1 to the second port P2 and at least one route from the second port P2 to the first port P1. It should be noted that the route from the first port P1 to the second port P2 and that from the second port P2 to the first port P1 may be identical to each other. The storage portion 3b may be included in the controller 3a or the watercraft operating controller 4.

As shown in FIG. 1, the watercraft 10 includes a steering device 13, a throttle lever 14, a marine propulsion device 15, an obstacle sensor 16, a position sensor 17, and a camera 18. Besides, the watercraft 10 includes a variety of devices required for remotely operating the watercraft 10 (not shown in the drawings) such as a velocity sensor, an acceleration sensor, a compass sensor, and a sonar.

The steering device 13 is a device for operating the direction of turning the watercraft 10. The throttle lever 14 is an operating member for regulating the magnitude of a thrust generated by the marine propulsion device 15 and switching the orientations of the thrust between fore and aft directions.

The marine propulsion device 15 includes an ECU (Electronic Control Unit) 21, a drive unit 22, a shift actuator 23, and a steering actuator 24.

The ECU 21 includes a processor such as a CPU and memories such as a RAM and a ROM. The ECU 21 has stored programs and data for controlling the marine propulsion device 15. The ECU 21 controls the drive unit 22. The drive unit 22 generates a propulsion force (thrust) for propelling the watercraft 10. The drive unit 22 includes an internal combustion engine. The drive unit 22 may include an electric motor.

The shift actuator 23 changes the rotational directions of a propeller from one to another in accordance with operating the throttle lever 14. The steering actuator 24 changes the rudder angle of the marine propulsion device 15 in accordance with operating the steering device 13.

The obstacle sensor 16 detects an obstacle in the surroundings of the watercraft 10 and outputs information regarding the obstacle to the watercraft operating controller 4. The obstacle sensor 16 is, for instance, a LiDAR (Light Detection and Ranging), a RADAR (Radio Detecting and Ranging), a millimeter wave radar, or so forth.

The position sensor 17 is, for instance, a GPS (Global Positioning System) receiver. The position sensor 17 obtains information regarding the position of the watercraft 10 from a GPS satellite. The position sensor 17 is connected to the watercraft operating controller 4 in a communicable manner. The watercraft operating controller 4 obtains the position of the watercraft 10 from a signal outputted thereto from the position sensor 17.

The camera 18 is capable of shotting moving images and still images. The camera 18 shoots images of the surroundings of the watercraft 10 and generates image data. The camera 18 shoots images of the fore, aft, port, and starboard sides from the watercraft 10. The camera 18 outputs the image data to the watercraft operating controller 4.

The watercraft operating controller 4 is disposed in the watercraft 10. The watercraft operating controller 4 is programmed to control the watercraft 10. The watercraft operating controller 4 includes a processor such as a CPU and memories such as a RAM and a ROM. The watercraft operating controller 4 has stored programs and data for controlling the marine propulsion device 15. The watercraft operating controller 4 is connected to the steering device 13, the throttle lever 14, and the marine propulsion device 15 by wired or wireless communication. The watercraft operating controller 4 controls the shift actuator 23 and the steering actuator 24 through the ECU 21.

The watercraft operating controller 4 enables the watercraft 10 to navigate to a destination by automatically controlling the watercraft 10. The destination herein refers to the first port P1 or the second port P2. In the automated watercraft operating mode, the watercraft operating controller 4 causes the watercraft 10 to automatically move from the first port P1 to the second port P2 or vice versa. For example, the watercraft operating controller 4 obtains watercraft operating information required for automatically operating the watercraft 10 in accordance with operating the operating terminal 20 and causes the watercraft 10 to navigate to the destination by automatically operating the watercraft 10. The watercraft operating information includes, for instance, information regarding the navigation route, the nautical chart, weather, and the destination. The watercraft operating controller 4 transmits the following to the server 3: information obtained by a variety of sensors disposed in the watercraft 10 and the image data generated by the camera 18. The watercraft operating controller 4 is configured to cause the server 3 to display the information, obtained by the server 3 from the watercraft operating controller 4, on, for instance, a display of the operating terminal 20.

The communication portion 5 is disposed in the watercraft 10. The communication portion 5 is capable of executing the satellite communication and the terrestrial communication. The communication portion 5 is capable of executing one selected from the satellite communication and the terrestrial communication. The communication portion 5 is a communication interface causing the watercraft operating controller 4 to be connected therethrough to a network IN such as the Internet in a communicable manner. The communication portion 5 measures the intensity of the radio waves transmitted from the ground base station 12 and outputs the measured intensity to the watercraft operating controller 4.

The communication switching portion 6 switches the communication methods to be executed by the communication portion 5 from one to another. The communication switching portion 6 is controlled by the watercraft operating controller 4. The communication switching portion 6 switches the communication methods to be executed by the communication portion 5 from one to another in accordance with a switching signal outputted thereto from the watercraft operating controller 4. For example, when the watercraft operating controller 4 determines that the radio waves transmitted from the ground base station 12 have become unreceivable, the communication switching portion 6 switches the communication methods to be executed by the communication portion 5 from the terrestrial communication to the satellite communication in response to the switching signal outputted thereto from the watercraft operating controller 4. Contrarily, when the watercraft operating controller 4 determines that the radio waves transmitted from the ground base station 12 have become receivable, the communication switching portion 6 switches the communication methods to be executed by the communication portion 5 from the satellite communication to the terrestrial communication in response to the switching signal outputted thereto from the watercraft operating controller 4.

The watercraft operating controller 4 controls the communication switching portion 6 such that the terrestrial communication is executed by the communication portion 5 in priority to the satellite communication. Because of this, when the radio waves transmitted from the ground base station 12 are receivable by the communication portion 5, the terrestrial communication is prioritized in the communication methods to be executed by the communication portion 5. It should be noted that when the radio waves transmitted from the ground base station 12 are receivable by the communication portion 5, and simultaneously, when the watercraft 10 has approached a position to which the watercraft 10 is docked, the watercraft operating controller 4 may control the communication switching portion 6 to switch the communication methods to be executed by the communication portion 5 from the satellite communication to the terrestrial communication. Alternatively, when the satellite communication is used in the open ocean, and simultaneously, when the watercraft 10 has approached the docking position, the watercraft operating controller 4 may control the communication switching portion 6 to switch the communication methods to be executed by the communication portion 5 from the satellite communication to the terrestrial communication.

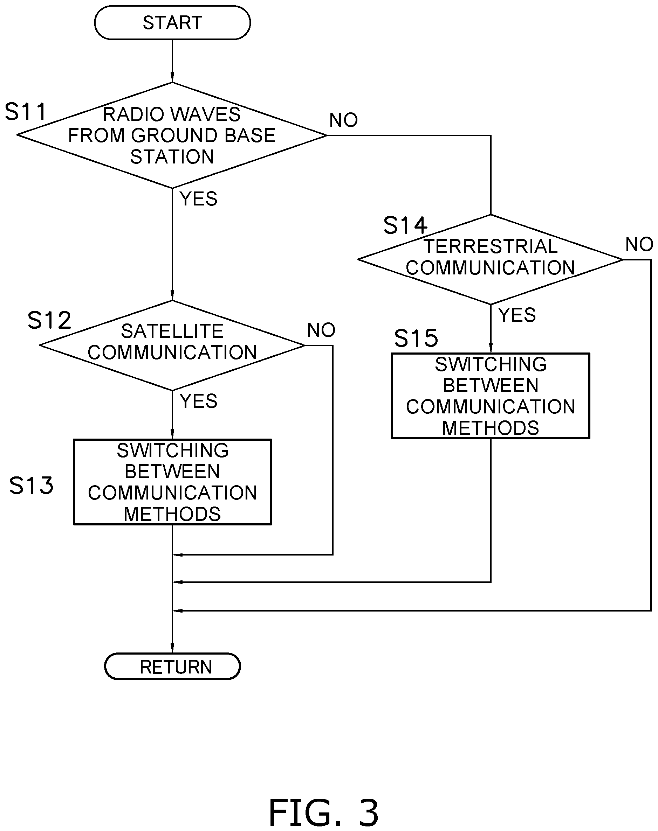

FIG. 3 is a flowchart showing a series of processing to be executed by the watercraft operating controller 4. In step S11, the watercraft operating controller 4 determines whether or not the radio waves transmitted from the ground base station 12 are receivable based on, for instance, the information regarding the measurement result of the radio wave intensity by the communication portion 5. It should be noted that in step S11, the watercraft operating controller 4 may determine whether or not the communication portion 5 is communicable with the controller 3a by the terrestrial communication.

When the watercraft operating controller 4 determines that the radio waves transmitted from the ground base station 12 are receivable, the processing proceeds to step S12; then, the watercraft operating controller 4 determines whether or not the satellite communication has been selected from the communication methods to be executed by the communication portion 5. When determining that the satellite communication has been selected from the communication methods to be executed by the communication portion 5, the watercraft operating controller 4 causes the communication switching portion 6 to switch the communication methods to be executed by the communication portion 5 from the satellite communication to the terrestrial communication (step S13). It should be noted that in step S12, when the watercraft operating controller 4 determines that the satellite communication has not been selected from the communication methods to be executed by the communication portion 5, the one selected at present from the communication methods (herein, the terrestrial communication) is maintained.

When the watercraft operating controller 4 determines that radio waves transmitted from the ground base station 12 are unreceivable, the processing proceeds to step S14; then, the watercraft operating controller 4 determines whether or not the terrestrial communication has been selected from the communication methods to be executed by the communication portion 5. When determining that the terrestrial communication has been selected from the communication methods to be executed by the communication portion 5, the watercraft operating controller 4 causes the communication switching portion 6 to switch the communication methods to be executed by the communication portion 5 from the terrestrial communication to the satellite communication (step S15).

It should be noted that, when determining that the satellite communication has been selected from the communication methods to be executed by the communication portion 5 in step S12, the watercraft operating controller 4 may determine whether or not the watercraft 10 has approached the docking position; then, when the watercraft operating controller 4 determines that the watercraft 10 has approached the docking position, the processing may proceed to step S13. The watercraft operating controller 4 may determine whether or not the watercraft 10 has approached the docking position by, for instance, calculating the distance from the docking position to the watercraft 10.

The operating portion 7 is provided for switching the communication methods to be executed by the communication portion 5 from one to another. The operating portion 7 is disposed in, for instance, the operating terminal 20. When the watercraft 10 is controlled in the remote watercraft operating mode, the communication switching portion 6 switches the communication methods to be executed by the communication portion 5 from one to another in accordance with operating the operating portion 7. Accordingly, an operator, who is remotely operating the watercraft 10, is allowed to manually switch the communication methods to be executed by the communication portion 5 from one to another.

When the communication methods of the communication portion 5 is the satellite communication, the information outputting portion 8 outputs information regarding delay due to the satellite communication. The watercraft operating controller 4 limits the velocity of the watercraft 10 in accordance with the information outputted thereto from the information outputting portion 8. The information outputting portion 8 measures, for instance, the duration of delay in communication between the controller 3a and the watercraft operating controller 4 due to the satellite communication. When the duration of delay in communication due to the satellite communication is greater than a predetermined value, the watercraft operating controller 4 limits the velocity of the watercraft 10, for instance, with reference to a velocity limit map that defines a relation between duration of delay in communication and velocity limit.

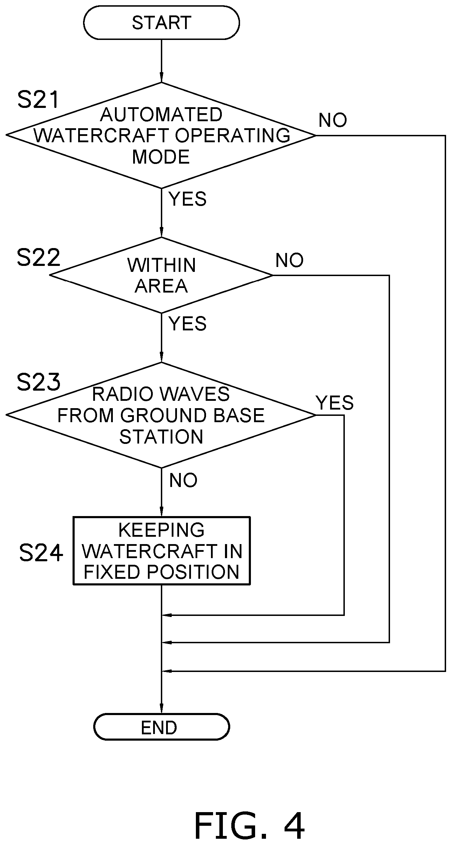

FIG. 4 is a flowchart showing a series of processing to be executed by the watercraft operating controller 4. The watercraft operating controller 4 controls the watercraft 10 to be kept in a fixed spot when radio waves transmitted from the ground base station 12 are unreceivable within a coverage area of the radio waves during execution of the automated watercraft operating mode. Keeping the watercraft 10 in the fixed spot means mooring the watercraft 10 within a predetermined range.

When the watercraft operating controller 4 determines that the automated watercraft operating mode has been executed in step S21, the processing proceeds to step S22. When the watercraft operating controller 4 determines that the watercraft 10 is located at present in the coverage area of the radio waves transmitted from the ground base station 12 in step S22, the processing proceeds to step S23. When the watercraft operating controller 4 determines that the radio waves transmitted from the ground base station 12 are unreceivable in step S23, the processing proceeds to step S24; then, the watercraft operating controller 4 keeps the watercraft 10 in the fixed spot until the radio waves transmitted from the ground base station 12 become receivable. When the radio waves transmitted from the ground base station 12 have become receivable, the watercraft operating controller 4 causes the communication switching portion 6 to switch the communication methods to be executed by the communication portion 5 from the satellite communication to the terrestrial communication and thereafter releases the watercraft 10 from being kept in the fixed spot. It should be noted that in step S24, the watercraft operating controller 4 may limit the velocity of the watercraft 10 instead of keeping the watercraft 10 in the fixed spot.

When determining that a predetermined condition (or conditions) is satisfied during execution of the automated watercraft operating mode, the watercraft operating controller 4 outputs an abnormal signal. The watercraft operating controller 4 determines whether or not the predetermined condition has been satisfied based on the image data generated by the camera 18. When determining that the image data cannot be correctly recognized, for instance, the watercraft operating controller 4 causes the server 3 to output the abnormal signal to, for instance, the operating terminal 20. The watercraft operating controller 4 may determine that the predetermined condition has been satisfied when any of the following conditions, for instance, has occurred: attachment of water droplets to the camera 18, the orientation of the camera 18 facing toward the sunlight, and displacement in position of the camera 18. Alternatively, the watercraft operating controller 4 may determine that the predetermined condition has been satisfied when any of the following conditions, for instance, has occurred: difficulty in avoiding an obstacle by continuing the automated navigation as it is, incapability of continuing the automated watercraft operation, and incapability of receiving the radio waves transmitted from the ground base station 12 in proximity to the docking position.

In the watercraft operating system 1 described above, when the radio waves transmitted from the ground base station 12 are unreceivable, the communication methods to be executed by the communication portion 5 are switched from the terrestrial communication to the satellite communication. Accordingly, even in a location outside the coverage area of the radio waves transmitted from the ground base station 12, it is made possible to remotely operate the watercraft 10 by utilizing the satellite communication. Contrarily, when the radio waves transmitted from the ground base station 12 are receivable, it is made possible to remotely operate the watercraft 10 by utilizing the terrestrial communication. Consequently, it is made possible to remotely operate the watercraft 10 with accuracy by a communication method with less delay in docking to a shore or in proximity to the shore.

One preferred embodiment of the present invention has been explained above. However, the present invention is not limited to the preferred embodiment described above.

### REFERENCE SIGNS LIST

1: Watercraft operating system, 4: Watercraft operating controller, 5: Communication portion, 6: Communication switching portion, 7: Operating portion, 8: Information outputting portion, 10: Watercraft

## Claims

1. A system for remotely operating a watercraft (10), the system comprising:
a controller (4) disposed in the watercraft, the controller (4) controlling the watercraft (10);
a communication portion (5) disposed in the watercraft (10), the communication portion (5) capable of a satellite communication utilizing a satellite and a terrestrial communication utilizing a ground base station; and
a communication switching portion (6) switching communication methods of the communication portion (5) from one to another, wherein
the communication switching portion (6) switches the communication methods of the communication portion (5) from the terrestrial communication to the satellite communication when radio waves transmitted from the ground base station are unreceivable.

2. The system according to claim 1, wherein the communication switching portion (6) switches the communication methods of the communication portion (5) from the satellite communication to the terrestrial communication when the radio waves transmitted from the ground base station are receivable.

3. The system according to claim 1, wherein the communication switching portion (6) switches the communication methods of the communication portion (5) from the satellite communication to the terrestrial communication when the radio waves transmitted from the ground base station are receivable and the watercraft (10) has approached a position to which the watercraft (10) is docked.

4. The system according to any one of claims 1 to 3, wherein the terrestrial communication is configured to be prioritized in the communication methods of the communication portion (5) when the radio waves transmitted from the ground base station are receivable.

5. The system according to any one of claims 1 to 4, further comprising:
an information outputting portion (8) outputting information regarding delay in the satellite communication when the communication methods of the communication portion (5) is the satellite communication.

6. The system according to claim 5, wherein the controller (4) limits a velocity of the watercraft (10) in accordance with the information outputted from the information outputting portion (8).

7. The system according to any one of claims 1 to 6, further comprising:
an operating portion switching the communication methods of the communication portion (5) from one to another, wherein
the communication switching portion (6) switches the communication methods of the communication portion (5) from one to another in accordance with operating the operating portion.

8. The system according to any one of claims 1 to 7, wherein the controller (4) enables the watercraft (10) to navigate to a destination by automatically operating the watercraft (10), the controller (4) either keeping the watercraft (10) in a fixed spot or limiting a velocity of the watercraft (10) when the radio waves transmitted from the ground base station are unreceivable within a coverage area of the radio waves transmitted from the ground base station.

9. The system according to any one of claims 1 to 8, wherein the controller (4) enables the watercraft (10) to navigate to a destination by automatically operating the watercraft (10), the controller (4) outputting an abnormal signal when determining that a predetermined condition has been satisfied during automatically operating the watercraft (10).

10. The system according to claim 9, further comprising:
a camera (18) shooting images of surroundings of the watercraft (10) to generate image data, wherein
the controller (4) determines whether or not the predetermined condition has been satisfied based on the image data.

11. Amethod of remotely operating a watercraft (10), the watercraft (10) including a communication portion (5) capable of a satellite communication utilizing a satellite and a terrestrial communication utilizing a ground base station, the method executed by a computer, the method comprising:
switching communication methods (S15) of the communication portion (5) from the terrestrial communication to the satellite communication when radio waves transmitted from the ground base station are unreceivable by the communication portion (5).

12. The method according to claim 11, further comprising:
switching the communication methods (S13) of the communication portion (5) from the satellite communication to the terrestrial communication when the radio waves transmitted from the ground base station are receivable by the communication portion (5).

13. The method according to claim 11, further comprising:
switching the communication methods of the communication portion (5) from the satellite communication to the terrestrial communication when the radio waves transmitted from the ground base station are receivable by the communication portion (5) and the watercraft (10) has approached a position to which the watercraft (10) is docked.

14. The method according to any one of claims 1 1 to 13, further comprising:
utilizing the terrestrial communication by prioritizing the terrestrial communication over the satellite communication when the radio waves transmitted from the ground base station are receivable by the communication portion (5).

15. The method according to any one of claims 1 1 to 14, further comprising:
outputting information regarding delay in the satellite communication when the communication methods of the communication portion (5) is the satellite communication.

16. The method according to claim 15, further comprising:
limiting a velocity of the watercraft (10) in accordance with the outputted information regarding delay in the satellite communication.

17. The method according to any one of claims 11 to 16, wherein
the watercraft (10) further includes an operating portion switching the communication methods of the communication portion (5) from one to another, the method further comprising:
switching the communication methods of the communication portion (5) in accordance with operating the operating portion.

18. The method according to any one of claims 1 1 to 17, further comprising:
automatically operating the watercraft (10) to enable the watercraft (10) to navigate to a destination; and
either keeping (S24) the watercraft (10) in a fixed spot or limiting a velocity of the watercraft (10) when the radio waves transmitted from the ground base station are unreceivable by the communication portion (5) within a coverage area of the radio waves transmitted from the ground base station.

19. The method according to claim any one of claims 1 1 to 18, further comprising:
automatically operating the watercraft (10) to enable the watercraft (10) to navigate to a destination; and
outputting an abnormal signal when it is determined that a predetermined condition has been satisfied during automatically operating the watercraft (10).

20. The method according to claim 19, further comprising:
shooting images of surroundings of the watercraft (10) to generate image data; and
determining whether or not the predetermined condition has been satisfied based on the image data.
